(19) Europäisches Patentamt
European Patent Office
Office européen des brevets

(11) EP 2 048 612 A1

(12) EUROPEAN PATENT APPLICATION

(43) Date of publication:
**15.04.2009 Bulletin 2009/16**

(51) Int Cl.:
***G06Q 30/00*** *(2006.01)*

(21) Application number: **08166443.5**

(22) Date of filing: **13.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **11.10.2007 US 998545 P**

(71) Applicant: **CVON Innovations Ltd**
**London W1F 7BY (GB)**

(72) Inventor: **Ahopelto, Timo**
**Helsinki 00120 (FI)**

(74) Representative: **McCann, Heather Alison et al**
**EIP**
**Fairfax House**
**15 Fulwood Place**
**London WC1V 6HU (GB)**

(54) **System and method for searching network users**

(57) System, method and computer program for targeting messaging in which a searching party can access a search engine and input search parameters, such as criteria relating to the importance of the search term and criteria relating to preferences of target users, to cause the search engine to search one or more databases based on the input search parameters and identify individuals meeting the search parameters. Each database may contain data about network usage patterns of individuals including events performed by each individual when using their terminal, e.g., when talking, messaging, browsing, blogging and responding to displayed messages.

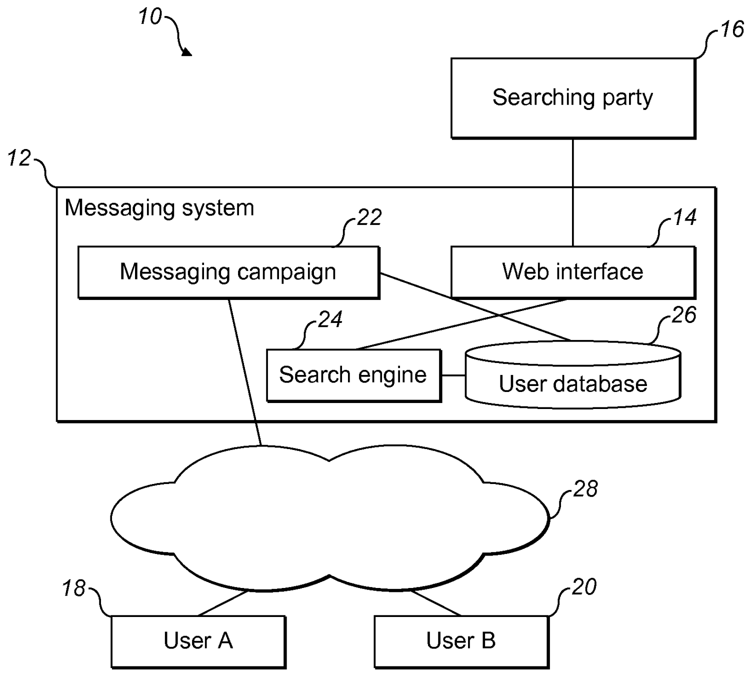


FIG. 1



Printed by Jouve, 75001 PARIS (FR)

## Description

### Field of the Invention

The present invention relates generally to systems and methods for searching for network users, and more specifically, but not exclusively, to identifying recipients on the basis of network usage patterns.

### Background Information

A key theme in activities such messaging campaigns is targeting, for example directing specific messages to user likely to respond to the messages. Typically, different databases of users offer a list of segmentation criteria and targeting criteria which enables each sending party to select one or more pre-determined user segments or targeted groups for their messaging campaign. These criteria are typically collected by database owners directly from users via different types of surveys, for example, surveys that are completed when the user applies for a new credit card application and relate to the user's interests and lifestyle. These criteria are typically categorized into demographic, geographic, socio-economic, lifestyle, behavior and similar categories, and they are traditionally based on self-declared information.

Such targeting systems exist for messaging campaigns. In practice, the message sending party selects one or more of the pre-determined criteria and the database is queried to identify users who match the selected criteria.

In the online world, there is a lot of data available about user's usage patterns and interest. In principle, every interaction with a digital online service could generate a log entry which can be analyzed to provide information about user's preferences. Thus, if a user repeatedly browses sports pages, each page entry can be considered to add a sports "hit" to the user's profile, enhancing the fact that the user is interested in sports. This data is then analyzed and different segments are presented to sending parties to target users with different demonstrated behaviors, i.e., demonstrated through browsing activity. Typically, the analysis is very laborious, performed in batches and results in clusters of users that then need to be named, characterized and presented to sending parties as a group.

A drawback of this type of target user identification is that a considerable amount of data is available, which data is created every time every monitored user browses the Internet, and it is problematic for a sending party to find relevant individuals for their messaging campaign. Moreover, the data changes in real-time which can result in changes to the identification of relevant, targeted individuals.

### Summary of the Invention

In accordance with at least one embodiment of the invention, methods, systems and software are provided for supporting or implementing functionality to enable searching of users of a telecommunications network, as specified in the independent claims. This is achieved by a combination of features recited in each independent claim. Accordingly, dependent claims prescribe further detailed implementations of the present invention.

More particularly, in accordance with one aspect of the present invention, there is provided a method for use in searching for users of a telecommunications network, the telecommunications network comprising a database arranged to store usage data indicative of usage patterns of users in relation to services using the telecommunications network, the method comprising:

receiving, from a searching party, a search request comprising:

- one or more search terms;
- importance criteria, indicative of an importance of the or each received search term for the searching party, and from which an importance weighting of the or each term can be derived; and
- target preference values relating to preferences of a target user with respect to one or more parties associated with the or each received search term; and,

in response to receiving a said search request:

- retrieving usage data from the database corresponding to the users;
- determining, on the basis of the retrieved usage data, a preference value for each user in relation to the or each received search term;
- determining a ranking value for each user on the basis of a degree of match between a received target preference value and a determined preference value for the user for each received search term, weighted according to the importance criteria; and
- outputting search results indicative of a plurality of users ranked according to the determined ranking values.

The usage data is based, at least in part, on actions performed by the users in the telecommunications network, such as telephone calls, email, SMS, MMS or other electronic messaging, internet browsing, blogging and/or responses to messages previously received.

The present invention therefore provides a significant advancement to prior art techniques for using network usage records to identify targeted, relevant individuals, for example for a messaging campaign, in that it performs a search for relevant individuals in a modem messaging environment, e.g., an online or mobile service, and is effective in spite of the availability of a great amount of data which would usually require time-consuming, expensive and non-real-time analysis. Moreover, the present invention enables searching based on user profiles that are built on unstructured information about the user's activities in a telecommunications network, such as a mobile communication network.

Brief Description of the Drawings

The invention, together with further objects and advantages thereof, may best be understood by reference to the following description taken in conjunction with the accompanying drawings, wherein like reference numerals identify like elements, and wherein:

Figure 1 is a schematic representation of a first embodiment of an architecture in which a search system in accordance with the invention can be used;
Figure 2 shows an exemplifying screen image used by a searching party to create a search; and
Figure 3 is a pictorial representation of links between users, advertised brands and Internet applications which are considered when implementing a system and method in accordance with the invention.

Detailed Description

Referring to the accompanying drawings wherein the same reference numerals refer to the same or similar elements, Figure 1 shows a first embodiment of an architecture in which a search system in accordance with the invention can be used. The architecture includes a message management arrangement 10 having a messaging system 12 comprising a search engine 24, which has one or more interfaces, e.g., Web interface 14, to allow a searching party 16, which may be a sending party in a messaging campaign, to interface therewith.

The web interface 14 may be a secured web interface. Each interface 14 provides the searching party 16 with the ability to set search parameters to find a relevant target group of people, such as users 18, 20, to be included and participate in the messaging campaign 22. There may be, in practice, thousands, tens or hundreds of thousands, or millions or more, participants in the messaging campaign 22. The users 18, 20 may be dedicated participants of a service provider operating the message management system 12.

The searching party 16 can be any entity or individual that wants to send messages, for example messages informing users about products or services. A searching party 16 can thus refer to a brand owner, a service provider, a messaging agent, a merchant or any other party that wants to provide messages to users. Messages may contain commercial information, such as a product or service promotions, or non-commercial information, as with a general information service notification. A searching party 16 can also be a store having a physical presence, an on-line store and the like, which sells or delivers goods and provides services directly to users ordering via the Internet or their mobile terminals.

The message management arrangement 10 may be operated by, for example, a messaging delivery company or a company in the business of delivering messages from several searching parties, i.e., it may be the intermediary between searching parties and the operators of the message distribution channels.

A search engine 24 is coupled to the interface 14 and a user database 26 and is arranged to perform searches based on parameters. The search engine 24 can be part of the message management system 12 or it can be a separate search service implemented in a separate server in the same or a different location than the message management system 12. A computer program, embodied on computer-readable medium, is resident in the search engine 24 and designed to conduct a search of the user database 26 based on the parameters input by the searching party 16 via the interface 14.

User database 26 includes usage data relating to network usage patterns of users 18, 20, for example, profiles created from user-provided information, information based on their browsing history or blogged events in the system, their interactions with other users 18, 20 (who the communications were with and what was the topic of the communication), their responses to messages, their purchase of products or services and all other uses of the mobile communication system by the users which can be identified and recorded which would be of interest to a searching party 16 in determining whether a user should be identified/selected to receive a message. In one embodiment, the user database 26 includes a log file of logging events, event logs and the contents thereof generated by the users 18, 20 while using the mobile communication system. A log file would be created for each user 18, 20. The log file may thus contain user's Internet search queries, web or WAP pages visited by the users, messages responded to by the users, messages exposed to the users, communications with other users (who communications were to and what was the subject), purchases made, to whom the user has sent messages and the like.

Although Figure 1 shows only a single user database 26 in the message management system 12, it is contemplated that the message management arrangement 10 may include multiple databases 26, all of which are coupled to the search engine 24. These databases 26 can be integrated into the message management system, 12 or separate and apart therefrom, e.g., at a different location. By coupling the search engine 24 to multiple and different databases 26, the message management system 12 provides searching parties 16 with the capability of having a single interface 14 which enables selection of criteria to search for relevant users from user databases that may have different indexing and information available.

The information contained in the user database 26 may be collected from user surveys, answers received to direct questions to the users and/or responses to past messages. In the latter case, a monitoring technique according the applicant's PCT application number PCT/EP2008/052741 may be used. According to this technique, messages containing triggering information for triggering a response to a communication, such as an email address, telephone number or an internet hyperlink, are included in messages sent to users. Communications from the users are then monitored, and if a user subsequently makes a communication to a destination to which the triggering information relates, it may be concluded that the communication is a consequence of the message containing the triggering information. Thus, if a user is sent a message containing an internet hyperlink to the website of a particular football team and the user subsequently accesses this website, it may be concluded that the user is interested in that football team, and that the user may be likely to respond to future such messages.

The message campaign 22 portion of the messaging management system 12 is used to deliver messages to users 18, 20 and to receive at least some responses to the message campaign 22, i.e., feedback from the users 18, 20 in response to the message campaign 22.

The users 18, 20 are connected to the message management system 12 via a communication network 28. Communications network 28 can utilize, for example, any of the cellular network technologies that include, but are not limited to, Global System for Mobile Communications (GSM), Wideband Code Division Multiple Access (WCDMA), Code Division Multiple Access (CDMA) and General Packet Radio Service (GPRS). In addition to traditional cellular networks, local area networks such as Wireless Local Area Networks (WLAN), BlueTooth (BT) and other technologies such as Worldwide Interoperability for Microwave Access (WiMax), Broadcasting over Digital Video Broadcasting-Handheld (DVB-H), Integrated Services Digital Broadcasting - Terrestrial (ISDB-T), (Digital Multimedia Broadcasting) DMB or broadcasting over cellular can be used, e.g., to deliver messages as discussed below. The communications network 28 can also be a generic Internet access network using any data transport methods. Moreover, the communications network 28 may be any cellular, broadcast, wide area, local area or Internet network. Communications network 16 can also be a combination of different communications networks such as a Wireless Local Area Network (WLAN) and a Wideband Code Division Multiplex (WCDMA) network. Using the foregoing network(s), the messages from searching parties can be Short Message Service (SMS) messages, Multimedia Message Service (MMS) messages, WAP Push, Web pages, or any digital object.

To use the message management system 12 to deliver messages to users 18, 20, a searching party 16 would access the search engine 24 via the web interface 14, e.g., by logging in, and use the search engine 24 to search the user database 26, i.e., search through the profiles by which the users 18, 20 in the database have been categorized or otherwise segmented, in order to design the messaging campaign (select which users to target for the messaging campaign). Once one or more profiles have been selected and users 18, 20 having the profile(s) are identified, the searching party 16 sets up the messaging campaign 22 for the identified users 18, 20. Setting up the messaging campaign 22 may include designating messages and delivery options and a budget for the delivery and size of the target audience, in addition to the selection of user profiles which is achieved by accessing the search engine 24.

The foregoing creation of a messaging campaign 22 may be implemented in numerous ways. For example, a searching party 16 could enter a designated website, open a "User Search" section and enter a specific term into a search box, e.g., "Coke", and could receive the screen shown in Figure 2. Then, the searching party 16 can drag-and-drop to the "Importance Chart" (shown in Figure 2), new criteria and a list of other brands, tradenames and the like, e.g., "Pepsi" and "Nike" which are helpful in selecting the targeted users for the campaign. The positioning on the "Importance Chart" of the words shown in Figure 2 reflects the relative importance of the respective term, i.e., the closer the position to the upper right, the more important the term to both the searching party 16 and the user (i.e. the stronger a preference the user has for a party associated with the term), and the closer the position to the lower left, the less important the term is to both the searching party and the user (explained in more detail below). When interacting with this interface 14, the search engine 22 calculates dynamically, based on searching the user database 26, the best matching users and displays the number of such users, e.g., in the background.

By enabling searching parties to insert their own search terms, searching parties can thereby direct the search engine 22 to search for any text that users 18, 20 have used in the mobile communication service, or from unstructured contents. For example, the headers of all page titles that a user 18, 20 browses, items or services that may have been purchased, and the subject or words of an email or text message can be stored into his or her profile to indicate the user's interest areas against which searching party 16 can search.

In Figure 2, there are two dimensions to the Importance Chart. The x-axis illustrates the preferences of the criteria to a user 18, 20 and the y-axis illustrates the importance of the criteria to a searcher, e.g., a searching party 16. Thus, looking at the term "Coke", the searching party 16 has dragged the term to the top right corner directing the search engine 24 to find users 18, 20 which feel Coke is important to them (i.e., they have links and/or keywords corresponding to Coke) and also indicating to the search engine 24 that Coke is a primary keyword in the search being performed on behalf of the searching party 16 (i.e., it must be there).

The search can be made more detailed by dragging and dropping additional search criteria into the Importance Chart, such as "Going out", "Pepsi", "Nike", "Puma" as shown in Figure 2. In this example, the users having the best matching criteria are displayed. The best matching user is one which prefers Coke and Nike, and, does not care much about Pepsi or Puma, and is about neutral about "Going out". As the searching party values information on Coke, the user's opinion on Coke is weighted more than Puma. For example, the search results can show users with no correlation to Puma and/or users having a preference for Puma. The ability to use multiple search terms and order them based on importance provides significant versatility to the invention.

The user database 26 can be designed to store usage data about the usage patterns of users 18, 20 in a variety of ways. In one particular way, for each user 18, 20 (subscriber, user, individual or user as alternatively referred to herein) there is a database or data file containing: initial profile information, a unique identification code, and dynamically changing information according to the user's actions and actions of other users in relation to the user through the mobile communication network. The dynamically changing information may also include actions or activities of the user toward or relative to other users and relations/response rates toward or relative to messages.

As an example of a response to a message, a user 18, 20 receives messages that are categorized in the "Going out" category, and responds to them in a normal way. User 18, 20 also always responds to messages from Coke and Nike, but never to messages from Pepsi and Puma, although sent to him regularly. These responses, or lack thereof, are stored into the user's data file, or logfile, in the user database 26 to assist in creating a profile of the user's interest level and responsiveness to specific topics, brands, etc.

In order to illustrate the user database 26, the user database 26 can be considered to work in a similar way to a web page with logical links to and from other web pages with certain weights attached to, on or otherwise associated with, the links. Similarly, a message database of where the message has been sent and what kinds of responses have been received may be maintained; this database may also be considered for the purpose of illustrating the invention as comprising web pages. The message database 26 can also have information on the references to and/or from other brands.

In addition to database information in the user datafile in the database 26, there can be logical links to public and/or private (non-public) blogs and home pages of the users 18, 20 in order to further enlarge the profiling of the users 18, 20, as is explained below.

Figure 3 is a pictorial representation of an exemplary logical linking between different profiles etc. The links have weights depending on the number of interactions. Some of the links might have different weights in different directions. For example, if brand 2 has sent ten messages to user A, the link from brand 2 to user A is valued at one, but if the user A has not responded to messages, the link value in the opposite direction is zero. Figure 3 shows users A, B, C and brands 1, 2, 3, and a blog of user A. There is no direct contact from brand 3 to users B and C. However, brand 3 is mentioned in blog A and user C links to blog A. Therefore, brand 3 has an indirect link to user C via blog A. Similarly, brand 2 has an indirect link to user C via users A and B.

An example of information or "html" style representation of the "User A.html" is as follows:

User A "Home page.html"
<User>
<META Keywords: Male, single, 18 years, No sugar, disco, no pubs />
<Received messages relating to brands: Brand 1 twelve times in last seven days, forty three times in total, Brand 2 none in last seven days, sixteen total, Brand 3 four times in last seven days, eighteen times in total>
<Responded to messages relating to brands: Brand 1 ten times in last seven days, Brand 2 never, Brand 3 three times in last seven days />
Recommended brands to others
Brand 1 to User B
<Communication activities:
23 messages to User B
10 messages from User B
1 message to User C
10 messages from User C
15 calls to User B
10 calls from User B
No calls to/from User C />
<a href="User A blogs (public/non public)"/a>
<blog 1.3.2007: I was traveling to Helsinki from London, I used AirBrand, the service was great.
3.3.2007: I visited Museum A with friends it was fun. />
<Service usage: Ringtone download 3.3.2007: Shakira, Metallica 1 1
times/>
</users

According to an embodiment of the invention, this type of metadata, database information, and/or html representation is analyzed using searching techniques for all or some of the users 18, 20 in the message arrangement 10, for all or some of the brands marketed by searching parties 16, and for all or some additional information like blogs of the users.

The search engine is used to a results page showing users ranked according to relevance, as illustrated in Figure 2. We now consider an example in which a searching party specifies search terms and importance criteria in relation to the specified search terms, and the user A is assessed for relevance in accordance with the above profile information.

In this example, we assume that the searching party specifies that the target user should like brand 1, dislike brand 2, like Airbrand and dislike football team X. It will be understood that there may additionally be other specified criteria, for example it may be specified that the user should be male and/or within a certain age range etc.; however, such other criteria will be ignored for the purpose of this example.

For the search engine 24 to evaluate the relevance of user A to the searching party, the following information from the user profile is relevant. In relation to brand 1: the user has responded to ten messages relating to brand 1 in the last seven days out of a total of twelve received, and also recommended brand 1 to a friend (user B); it may therefore be concluded that user A has a preference for brand 1. In relation to brand 2: the user has never responded to a message relating to brand 2; it may therefore be concluded that the user dislikes brand 2. In relation to Airbrand: the user has made a positive comment relating to Airbrand in their blog; it may therefore be concluded that the user likes Airbrand.

Thus, a search engine 24 according to embodiments of present invention does not merely look at, for example, the number of matches of a particular search term in a particular user profile, but also looks at the context in which the search term appears. For example, the term "Airbrand" appears in an entry made by user A in their blog; however, in order to determine a preference of user A in relation to Airbrand it is also necessary to look at the context in which it is used, for example whether comments made in relation to it are positive or negative. This can be done by looking for words indicative of preference (such as "good", "great", "bad", "awful" etc.) in the vicinity of the search term.

It should be noted that, as well as information relating to specific brands, the search engine 24 may also search the profile in relation to more general concepts; for example, if the searcher specified that good service should be important to the user, and/or that the user should like or dislike air travel, information relevant to this can be derived from the blog entry.

The search engine 24 can deduce from the information contained in the user profile for user A that there is a good match with the search terms and importance criteria specified in relation to brand 1, brand 2 and Airbrand. It cannot obtain any information directly from user profile A in relation to user A's preferences regarding football team X; however, it may use links to other user profiles in accordance with embodiments of the present invention as is now described.

It can be seen from the communication activities section of user A's profile that user A has regular contact with user B. It may be that user B is known from his/her own activities and/or user supplied profile information to be a supporter of football team X. Further, it may be that the blog into which user A has submitted comments regularly receives positive comments in relation to football team X. The search engine 24 can use Information such as to conclude that user A is likely to have a preference for football team X; since the searcher has specified that the target user should dislike football team X, the search engine 24 may conclude that user A is not a good match in relation to the importance criterion specified in relation to football team X. This may lower the ranking of user B in the results output in relation to this search.

The above example provides a qualitative illustration of a search engine 24 performing a search in accordance with an embodiment of the present invention. However, it will be understood that, in practice, the search engine 24 typically performs a quantitative evaluation in relation to each specified search term. The preferences specified by the searching party in relation to each search term are typically represented quantitatively as target preference values; these values may be specified directly by the searching party, or calculated by the search engine 24 in accordance with the positioning of the terms in the importance chart shown in Figure 2. In the above example, the target preference values could be 97 for brand 1, -15 for brand 2, 75 for Airbrand and -28 for football team X.

Similarly, the search engine 24 typically calculates importance weightings from the importance criteria specified by the searching party; conveniently, it may be arranged so that the sum of the weighting values for the search terms is 1. For example, a weighting of 0.42 for brand 1, 0.32 for brand 2, 0.10 for Airbrand and 0.16 for Football teams X.

In performing the search, the search engine 24 typically calculates a preference value for a particular brand in relation to each user that is the subject of the search. For example, if a user has responded to all messages received in relation to a particular brand, this may add a value of ten to the preference value for this brand; if they have responded to only half, this may make no contribution to the preference value; if they have responded to none of the messages, this may contribute a value of minus ten to the preference value. Similarly, if the user makes a positive comment on a blog regarding the brand, this may add to the preference value, with negative comments reducing the preference value. In some embodiments, maximum and minimum values are imposed on the calculated preference values, for example, ±100.

Where the search engine 24 obtains information indirectly, as in the example given above in relation to user A and football team X, a weighting factor may be applied in accordance with the strength of the links described above in relation to Figure 3. In the above example, the information inferred about user A regarding football team X from the nature of the blog used by user A and from the association of user A with user B may be weighted in this way.

Further weighting factors may alternatively or additionally be applied. For example, a contribution to a preference value determined from message responses may be weighted in accordance with a message response time, with messages responses received more quickly after the original message is sent having a greater weighting than those received less quickly.

The search engine 24 then uses the target preference values, the importance weighting and the calculated reference values to evaluate a ranking for each user. This could be done according to the following formula:

$$R = \sum_{i=1}^{N} \frac{Wi(r - |P_{Ti} - P_{Ci}|)}{r}$$

Where R is a ranking value for a given user, N is the number of search terms being searched, $W_i$ is the importance weighting associated with search term i, $P_{Ti}$ is the target preference value for search term i, $P_{Ci}$ is the calculated preference value for search term i and r is the total range over which the target preference values and the calculated test values can vary (e.g. 200 in the case of maximum and minimum values of $\pm$100),.

Once the ranking values have been determined for the users, results may be presented for some or all of the users searched in the form of a results list, which is typically ordered according to the determined ranking; an explicit ranking or "match" value may be presented, as in the example of Figure 2.

Enhancements may be made to the foregoing message management arrangement system. In one embodiment, users 18, 20 provided with the highest score in the search receive extra benefits. Thus, a user 18, 20 is rewarded for being responsive to messages, and thus more valuable to the operator of the message management arrangement 10 (because this user has a higher likelihood of being selected by a searching party 16). Moreover, the users 18,20 can be valued based on their purchasing advertised products, and this purchasing history is added to the database 26 such that searching parties may be required to pay more to advertise to such high-value users.

Additionally, users 18, 20 themselves can be enabled to use the same search engine 24 to see how they rank in order for them to fine tune their profile to improve their scoring in the search. Thus, users 18, 20 would be provided with access to an interface to the search engine 24. The users 18, 20 could therefore take steps to increase their value and earn rewards, e.g., be a targeted user more often. For example, if a user consistently responds to messages containing gaming advertisements and has a history of inviting friends, the user could be considered an alpha gamer and therefore picked by searching parties who want to talk to gamers.

With respect to the parameters representing the axes of the Importance Chart in Figure 2, this type of multi-dimensional representation of multiple search parameters and the importance thereof can be used in any web search engine to make a search more efficient.

As another example of the use of the invention, if a searching party 16 wants to sell ringtones of a specific musical performer, the searching party 16 would access the search engine 24 via the interface 14 and enter terms such as "ringtones" and the name of the performer. The search engine 24 would search the database(s) 26 and provide the number of users 18, 20, whose data is present in the database(s) 26, who have previously purchased the performer's ringtones, the number of users 18, 20 who have previously purchased the performer's music (whether ringtones, singles, albums or other), the number of users 18, 20 who have previously purchased ringtones (whether by the specific performer or other performers), the number of users 18, 20 who have previously downloaded music (whether by the specific performer or other performers), the number of users 18, 20 who have previously downloaded or viewed music-related content, the number of users 18, 20 who have previously searched for the specific performer's name, and other related results. The results could be ordered by relevance to the keywords entered. The results would be derived from message campaigns, browsing logfiles, purchase histories and the like. In this manner, the searching party 16 can optimize the target for their message and thereby improve the messaging campaign.

Several computer programs resident on computer-readable media may be used in the invention. One computer program is resident in the message management system 12 and provides messages to the communications network 28. Another computer program may be resident in the search engine 24 and conducts the searches of the database(s) 26 formulated via the interface 14.

In the context of this document, computer-readable medium could be any means that can contain, store, communicate, propagate or transmit a program for use by or in connection with the method, system, apparatus or device. The computer-readable medium can be, but is not limited to (not an exhaustive list), electronic, magnetic, optical, electromagnetic, infrared, or semi-conductor propagation medium. The medium can also be (not an exhaustive list) an electrical connection having one or more wires, a portable computer diskette, a random access memory (RAM), a read-only memory (ROM), an erasable, programmable, read-only memory (EPROM or Flash memory), an optical fiber, and a portable compact disk read-only memory (CDROM). The medium can also be paper or other suitable medium upon which a program is printed, as the program can be electronically captured, via for example, optical scanning of the paper or other medium, then compiled, interpreted, or otherwise processed in a suitable manner, if necessary, and then stored in a computer memory. Also, a computer program or data may be transferred to another computer-readable medium by any suitable process such as by scanning the computer-readable medium.

Having described exemplary embodiments of the invention with reference to the accompanying drawings, it will be appreciated that the present invention is not limited to those embodiments, and that various changes and modifications can be effected therein by one of ordinary skill in the art without departing from the scope or spirit of the invention. In particular, in the above example, the search engine 24 was described in relation to a messaging system; however, the search engine is not limited to such uses; it may be used in other applications, such as internet dating, recruitment consultancy or any other application where profile searching and matching is useful.

Clauses

A message management arrangement capable of targeting messaging, comprising:

> at least one database containing data about a plurality of individuals to which messages can be directed, said database being generated based on events performed by each individual when using a terminal;
> a search engine arranged to search said at least one database; and
> at least one interface for enabling message senders to access said search engine and to input search parameters into said search engine to cause said search engine to search said at least one database based on the input search parameters and identify individuals meeting the search parameters,
> whereby messages can be directed to the identified individuals' terminals.

The above arrangement, wherein each of said at least one interface is arranged to enable the message senders to associate messages with the identified individuals and define rules for a messaging campaign.

The above arrangement, further comprising a message campaign formation unit which receives the rules of the messaging campaign defined by the message senders and the identified individuals from said at least one database and directs messages to the identified individuals in accordance with the defined rules.

The above arrangement, wherein said message campaign formation unit is arranged to receive feedback from the individuals and include the feedback in said at least one database.

The above arrangement, wherein said message campaign formation unit is arranged to receive messages from the message senders.

The above arrangement, wherein said message campaign formation unit is arranged to present message senders with a two-dimensional chart showing importance of a search parameter to an individual and importance of a search parameter to the message sender.

The above arrangement, wherein said message campaign formation unit is arranged to enable message senders to provide multiple search parameters on a common chart.

The above arrangement, wherein said database is generated based on use of a mobile telecommunications service by the individual's terminal.

The above arrangement, wherein the individual is a subscriber to a mobile telecommunications network.

The above arrangement, wherein said at least one database is generated from messages and data to and from the terminal.

The above arrangement, wherein said at least one database comprises a plurality of databases, each containing different information.

The above arrangement, wherein said at least one database includes at least one database which is not on a common server with said search engine.

The above arrangement, wherein said at least one interface is arranged to enable message senders to input search terms as the search parameters.

The above arrangement, wherein said database includes logging events and the contents of logging events generated by the individuals.

The above arrangement, wherein said database includes a log file for each individual which contains event logs and contents of logged events.

The above arrangement, wherein the log file includes profile information and/or dynamically changing information according to the individual's actions using the terminal and/or actions of an other individual interacting with the individual via the terminal.

The above arrangement, wherein each log file includes data about telephone calls received by and/or initiated from the terminal.

The above arrangement, wherein the data comprises details about the participants in the telephone calls and/or content of the telephone calls.

The above arrangement, wherein each log file includes data about messages received by and/or initiated from the terminal.

The above arrangement, wherein the data comprises details about the participants to the messages and/or content of the messages.

The above arrangement, wherein each log file includes data about purchases by the individual, roaming by the individual and/or browsing by the individual.

The above arrangement, wherein each log file includes the individual's relations/response rates toward or relative to messages.

The above arrangement, wherein each log file has a form of a web page with at least one link to and from another web page, blog or individuals' home pages.

The above arrangement, wherein each of the at least one link is associated with at least one weight relating to the relevance of the at least one link.

The above arrangement, wherein each of the at least one link has multiple weights, one for each direction between the linked obj ects.

The above arrangement, wherein said database contains information about responses from each individual to previously viewed messages.

The above arrangement, wherein said at least one interface is arranged to enable message senders to select search parameters from a pre-determined number of categories or classifications into which the individuals have been classified or categorized.

The above arrangement, wherein the terminal is a mobile terminal.

A messaging management arrangement capable of targeting messaging, comprising:

at least one database containing a plurality of log files, each log file relating to an individual to which messages can be directed and having a dynamic form based on actions performed by each individual when using a terminal;
a search engine arranged to search said at least one database; and
at least one interface for enabling message senders to access said search engine and to input search parameters into said search engine to cause said search engine to search said at least one database based on the input search parameters and identify individuals meeting the search parameters.

The above arrangement, wherein each log file includes profile information and/or dynamically changing information according to the individual's actions using the terminal and actions of an other individual interacting with the individual via the terminal.

The above arrangement, wherein each log file includes data about telephone calls received by and/or initiated from the terminal.

The above arrangement, wherein the data comprises details about the participants in the telephone calls and/or content of the telephone calls.

The above arrangement, wherein each log file includes data about messages received by and/or initiated from the terminal.

The above arrangement, wherein the data comprises details about the participants to the messages and/or content of the messages.

The above arrangement, wherein each log file includes data about purchases by the individual, roaming by the individual and/or browsing by the individual.

The above arrangement, wherein each log file includes the individual's relations/response rates toward or relative to messages.

The above arrangement, wherein each log file has a form of a web page with at least one link to and from another web page, blog or individuals' home pages.

The above arrangement, wherein each of the at least one link is associated with at least one weight relating to the relevance of the at least one link.

The above arrangement, wherein each of the at least one link has multiple weights, one for each direction between the linked obj ects.

The above arrangement, wherein the terminal is a mobile terminal.

A method for targeting messages to individuals, comprising:

forming at least one database containing data about a plurality of individuals to which messages can be directed based on information about each individual and events performed by each individual when using a terminal;
searching the at least one database based on search parameters input by message senders to identify individuals meeting the search parameters; and
enabling the messages to be directed to the identified individuals' terminals.

The above method, wherein the at least one database comprises a plurality of databases, further comprising forming the databases such that each contains different information.

The above method, further comprising:

monitoring the individuals while browsing; and
including logging events and the contents of logging events generated by the individuals obtained while monitoring the individuals in the at least one database.

The above method, further comprising forming the at least one database to include a log file for each individual which contains event logs and contents of logged events.

The above method, further comprising including profile information and/or dynamically changing information according to the individual's actions using the terminal and/or actions of other individual interacting with the individual via the terminal in the log file.

The above method, further comprising including data about telephone calls received by and/or initiated from the terminal in the log file.

The above method, wherein the data is details about the participants in the telephone calls and/or content of the telephone calls.

The above method, further comprising including data about messages received by and/or initiated from the terminal in the log file.

The above method, wherein the data comprises details about the participants to the messages and/or content of the messages.

The above method, further comprising including data about purchases by the individual, roaming by the individual and/or browsing by the individual in the log file.

The above method, wherein each log file has a form of a web page with at least one link to and from another web page, blog or individuals' home pages.

The above method, further comprising associating at least one weight relating to the relevance of the at least one link to each of the at least one link.

The above method, further comprising forming the at least one database based on use of a mobile telecommunications service by the individual's terminal.

The above method, wherein the individual is a subscriber to a mobile telecommunications network.

The above method, further comprising forming the at least one database from messages and data to and from the terminal.

The above method, further comprising:

receiving feedback from the individuals in response to delivered messages; and
including the received feedback in the at least one database.

The above method, further comprising:

delivering messages to the individuals; and
monitoring the individual's responses to the delivered messages; and
including information about the responses from each individual to the messages in the at least one database.

The above method, further comprising:

providing the message senders with pre-determined categories or classifications into which the individuals have been classified or categorized; and
enabling the message senders to search the at least one database based on selection of one or more predetermined categories or classifications.

The above method, further comprising enabling message senders to associate messages with the identified individuals and define rules for a messaging campaign.

The above method, further comprising:

presenting message senders with a two-dimensional chart showing importance of a search parameter to an individual and importance of a search parameter to the message sender; and
enabling each message sender to obtain a numerical indication of individuals attaching the same importance to a search parameter.

A computer program embodied on computer-readable medium and which is capable of targeting messages to individuals, the computer program being arranged to:

form at least one database containing data about a plurality of individuals to which messages can be directed based on information about each individual and events performed by each individual when using a terminal;
search the at least one database based on search parameters input by message senders to identify individuals meeting the search parameters; and
enable the messages to be directed to the identified individuals' terminals.

The above computer program, wherein the computer program is further arranged to dynamically update the at least one database based on actions by the individuals.

The above computer program, wherein the computer program is further arranged to monitor the individuals while browsing and include logging events and the contents of logging events generated by the individuals obtained while monitoring the individuals in the at least one database.

The above computer program, wherein the computer program is further arranged to form the at least one database to include a log file for each individual which contains event logs and contents of logged events.

The above computer program, wherein the log file includes profile information and dynamically changing information according to the individual's actions using the terminal and/or actions of an other individual interacting with the individual via the terminal.

The above computer program, wherein the log file includes data about telephone calls received by and/or initiated from the terminal.

The above computer program, wherein the data comprises details about the participants in the telephone calls and/or content of the telephone calls.

The above computer program, wherein the log file includes data about messages received by and/or initiated from the terminal.

The above computer program, wherein the data comprises details about the participants to the messages and/or content of the messages.

The above computer program, wherein the log file includes data about purchases by the individual, roaming by the individual and/or browsing by the individual.

The above computer program, wherein each log file has a form of a web page with at least one link to and from another web page, blog or individuals' home pages.

The above computer program, wherein the computer program is further arranged to receive feedback from the individuals in response to delivered messages and include the received feedback in the at least one database.

A method for targeting messages to individuals, comprising:

forming at least one database containing a plurality of log files, each log file relating to an individual to which messages can be directed and having a dynamic form based on actions performed by each individual when using a terminal;
searching the at least one database based on search parameters input by message senders to identify individuals meeting the search parameters; and
enabling the messages to be directed to the identified individuals' terminals.

The above method, further comprising including profile information and/or dynamically changing information according to the individual's actions using the terminal and actions of an other individual interacting with the individual via the terminal in the log file.

The above method, further comprising including data about telephone calls received by and/or initiated from the terminal in the log file.

The above method, wherein the data comprises details about the participants in the telephone calls and/or content of the telephone calls.

The above method, further comprising including data about messages received by and/or initiated from the terminal in the log file.

The above method, wherein the data comprises details about the participants to the messages and/or content of the messages.

The above method, further comprising including data about purchases by the individual, roaming by the individual and/or browsing by the individual in the log file.

The above method, further comprising including the individual's relations/response rates toward or relative to messages in the log file.

The above method, further comprising forming each log file in a form of a web page with at least one link to and from another web page, blog or individuals' home pages.

The above method, further comprising associating each of the at least one link with at least one weight relating to the relevance of the at least one link.

A computer program embodied on computer-readable medium and which is capable of targeting messages to individuals, the computer program being arranged to:

form at least one database containing a plurality of log files, each log file relating to an individual to which messages can be directed and having a dynamic form based on actions performed by each individual when using a terminal;

search the at least one database based on search parameters input by message senders to identify individuals meeting the search parameters; and

enable the messages to be directed to the identified individuals' terminals.

The above computer program, wherein the log file includes profile information and/or dynamically changing information according to the individual's actions using the terminal and/or actions of other individual interacting with the individual via the terminal.

The above computer program, wherein the log file includes data about telephone calls received by and/or initiated from the terminal.

The above computer program, wherein the data comprises details about the participants in the telephone calls and/or content of the telephone calls.

The above computer program, wherein the log file includes data about messages received by and/or initiated from the terminal.

The above computer program, wherein the data comprises details about the participants to the messages and/or content of the messages.

The above computer program, wherein the log file includes data about purchases by the individual, roaming by the individual and/or browsing by the individual.

The above computer program, wherein each log file has a form of a web page with at least one link to and from another web page, blog or individuals' home pages.

The above computer program, wherein each log file has a form of a web page with at least one link to and from another web page, blog or individuals' home pages.

The above computer program, wherein the computer program is further arranged to receive feedback from the individuals in response to delivered messages and include the received feedback in the at least one database.

## Claims

**1.** A method for use in searching for users of a telecommunications network, the telecommunications network comprising a database arranged to store usage data indicative of usage patterns of users in relation to services using the telecommunications network, the method comprising:

receiving, from a searching party, a search request comprising:

one or more search terms;

importance criteria, indicative of an importance of the or each received search term for the searching party, and from which an importance weighting of the or each term can be derived; and

target preference values relating to preferences of a target user with respect to one or more parties associated with the or each received search term; and, in response to receiving a said search request:

retrieving usage data from the database corresponding to the users;

determining, on the basis of the retrieved usage data, a preference value for each user in relation to the or each received search term;

determining a ranking value for each user on the basis of a degree of match between a received target preference value and a determined preference value for the user for each received search term, weighted according to the importance criteria; and
outputting search results indicative of a plurality of users ranked according to the determined ranking values.

2. A method according to claim 1, comprising determining the preference value on the basis of a context in which a search term occurs in the usage data.

3. A method according to either of claim 1 or claim 2, in which the preference value for a given user is determined on the basis of one or more usage patterns of one or more other users with which the given user is linked, the links being derived from the usage data.

4. A method according to claim 3, in which the preference value is determined on the basis of weighting associated with said links, the weighting being based on an amount of communications contact in the telecommunications network between the given user and the one or more other users.

5. A method according to any preceding claim, in which the usage data for a given user comprises:

data indicative of messages sent to the given user, the messages comprising information relating to parties associated with the received search terms; and
data indicative of a number of responses to the messages from the given user,

wherein the preference value for the given user is determined on the basis of said number, or a proportion of messages to which the given user has responded.

6. A method according to claim 5, in which the preference value for the given user is determined on the basis of an amount of time between messages being sent and said responses.

7. A method according to any preceding claim, comprising selecting users on the basis of the determined ranking values and sending messages to the selected users.

8. A search system for use in searching users of a telecommunications network, the telecommunications network comprising a database arranged to store usage data indicative of usage patterns of users in relation to services using the telecommunications network, the system comprising:

data input means operable to receive, from a searching party, a search request comprising:

one or more search terms;
importance criteria, from which an importance of the or each received search term for the searching party can be derived; and
preference criteria, from which a target preference of a user in
relation to the or each received search term can be derived; and

processing means arranged, responsive to receipt of said search request, to:

retrieve usage data from the database corresponding to the users;
determine, on the basis of the retrieved usage data, a preference value for each user in relation to the or each received search term;
and
determine a ranking value for each user on the basis of a degree of match between a said received preference criterion and a determined preference value for the user for each received search
term, weighted according to the importance criteria,

wherein the search system is arranged to output search results indicative of a plurality of users ranked according to the determined ranking values.

9. A search system according to claim 8, wherein the preference value is determined on the basis of a context in which a search term occurs in the usage data.

10. A search system according to either of claim 8 or claim 9,
wherein the processing means is arranged to determine a preference value for a given user at least partly on the basis of one or more usage patterns of one or more other users with which the given user is linked, the links being derivable from the usage data.

11. A messaging system comprising a search system according to any of claim 8 to claim 10, the messaging system comprising means operable to select users and send messages to the selected users, the selection of users being performed on the basis of the determined ranking values.

12. A computer program arranged, when run on a computer, to cause the computer to perform the method of any of claim 1 to claim 7.

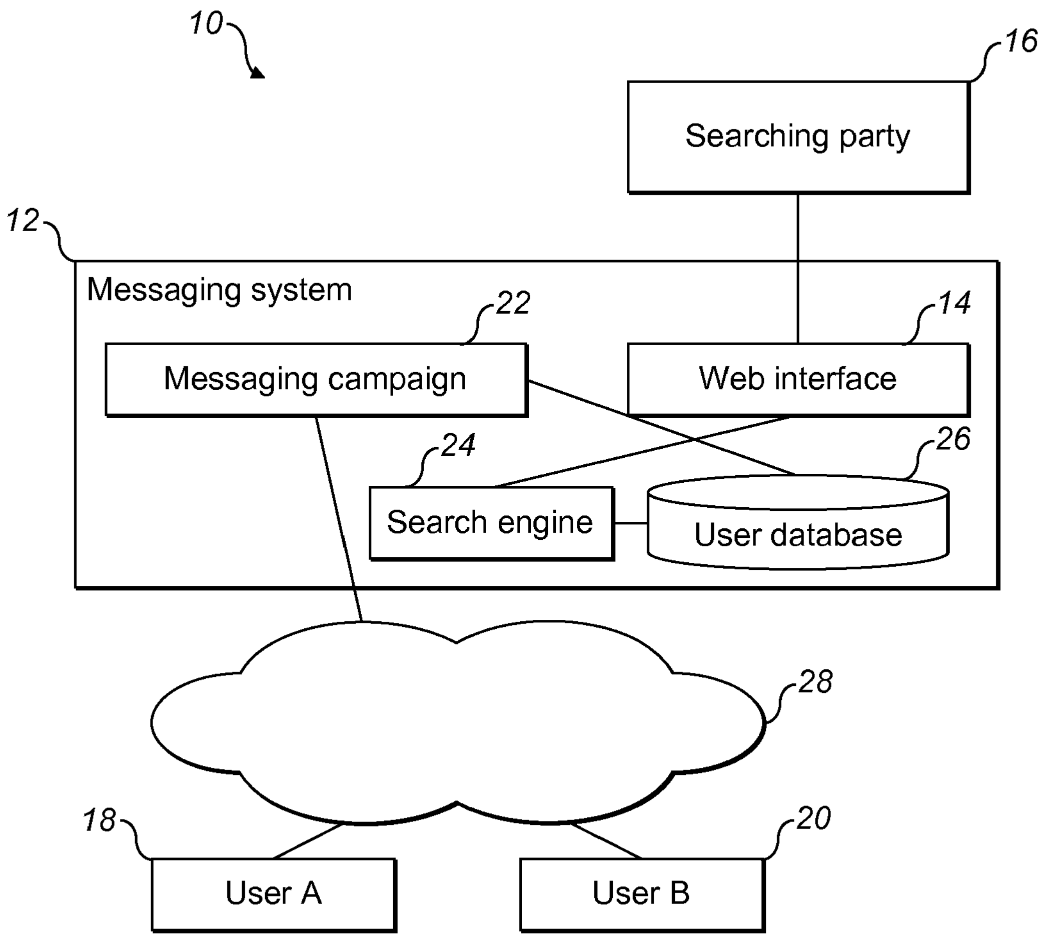
10
16
Searching party
12
Messaging system
22
14
Messaging campaign
Web interface
24
26
Search engine
User database
28
18
20
User A
User B

FIG. 1

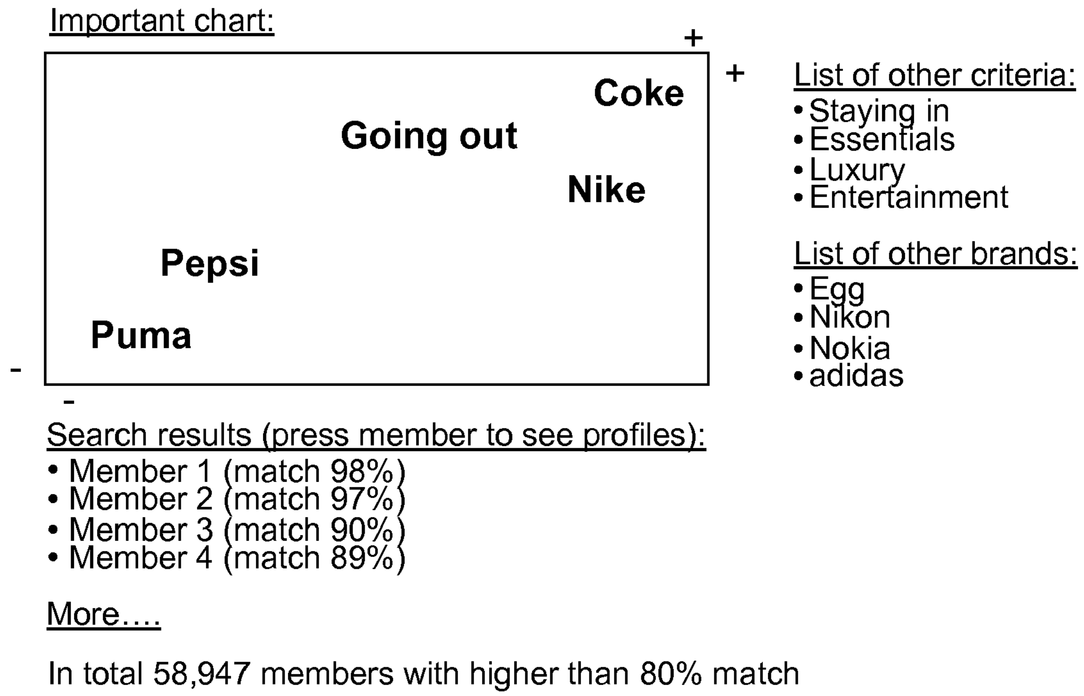
Important chart:
+
+
Coke
Going out
Nike
Pepsi
Puma
-
-
List of other criteria:
• Staying in
• Essentials
• Luxury
• Entertainment
List of other brands:
• Egg
• Nikon
• Nokia
• adidas
Search results (press member to see profiles):
• Member 1 (match 98%)
• Member 2 (match 97%)
• Member 3 (match 90%)
• Member 4 (match 89%)
More….
In total 58,947 members with higher than 80% match

*FIG. 2*

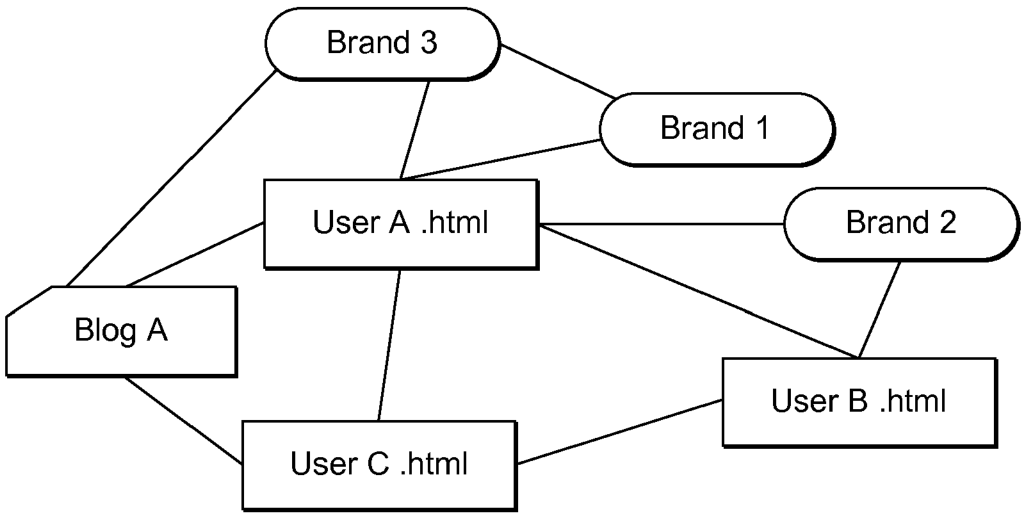
Brand 3
Brand 1
User A .html
Brand 2
Blog A
User B .html
User C .html

*FIG. 3*

Europäisches Patentamt
European Patent Office
Office européen des brevets

# DECLARATION

which under Rule 63 of the European Patent Convention shall be considered, for the purposes of subsequent proceedings, as the European search report

Application Number
EP 08 16 6443

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | INV. G06Q30/00 |

The claimed and disclosed subject-matter is limited to that which in accordance with the convention, see Art. 52(2), cannot be considered an invention, irrespective of its originality and hence such subject-matter as such in the sense of Art. 52(3) EPC.
Classifying and ranking user their past behaviour and interaction is a mental act. From the description it appears that the mental act is intended to be used in a method of doing business. The fact that their interaction with a technical telecommunications system which, moreover, is otherwise unspecified is used for classification does not convey a patentable character to either the claims or the disclosure, in the same manner as classifying users by the shoes or cars they have been using in the past provides a patentable idea. The usage of certain shoes and cars may or may not be indicator of the buying intentions of a consumer but is not a direct technical quantity or quality.
In the present case the application is not targeted at the solution of a technical problem in the sense of directly and wilfully controlling the powers of nature, nor for transforming or transporting concrete physical entities, but on the contrary, at rendering a business process, i.e. advertising, more economically fruitful.
The alleged invention does not extend beyond the fields being considered unpatentable by the convention merely because they may be implemented by means of a program for computers which is a

1

-/--

| Place of search | Date | Examiner |
|---|---|---|
| Munich | 30 January 2009 | Beker, Harald |

EPO FORM 1504 (P04F37)

Europäisches Patentamt
European Patent Office
Office européen des brevets

# DECLARATION

which under Rule 63 of the European Patent Convention shall be considered, for the purposes of subsequent proceedings, as the European search report

Application Number
EP 08 16 6443

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|

Reason:

field which is also expressly enumerated among the unpatentable fields. A database is nothing but a generic technically unspecified computer running a program which in response to non technical data renders non-technical data
In the practice of this office the assessment of patentability occurs irrespective of the kind and form of the claim, hence the objection applies likewise to the system claims which define the subject-matter not in terms of the technical constitution but in terms of its nontechnical function.
This assessment concerning both the claims and the original disclosure in toto, the latter being the only allowable basis for amendments, the automatically generated legal advice in the next paragraph, referring to circumstances leading to a search at a later stage in the procedure is apparently inapplicable in the present case. In case of entry into the examination phase, refusal is to be expected immediately after the applicant has exercised his right to be heard within the time limit to be set therefor and without any prior office action.

The applicant's attention is drawn to the fact that a search may be carried out during examination following a declaration of no search under Rule 63 EPC, should the problems which led to the declaration being issued be overcome (see EPC Guideline C-VI, 8.2).

-----

1

| Place of search | Date | Examiner |
|---|---|---|
| Munich | 30 January 2009 | Beker, Harald |

EPO FORM 1504 (P04F37)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2008052741 W